# EUROPÄISCHE PATENTSCHRIFT

(11) **EP 3 471 926 B1**
(45) Veröffentlichungstag und Bekanntmachung des Hinweises auf die Patenterteilung: **07.06.2023**
(21) Anmeldenummer: 17728770.3
(22) Anmeldetag: 07.06.2017
(51) Int. Cl.: B25J 9/16

(54) **ÜBERWACHUNG EINER ROBOTERANORDNUNG**
MONITORING A ROBOT ASSEMBLY
SURVEILLANCE D'UN ENSEMBLE ROBOTIQUE

(30) Priorität: 20.06.2016 DE 102016007520
(43) Veröffentlichungstag der Anmeldung: 24.04.2019
(73) Patentinhaber: KUKA Deutschland GmbH, 86165 Augsburg (DE)
(72) Erfinder: KEIBEL, Andreas, 86161 Augsburg (DE); LIEPERT, Bernd, 86495 Meitingen (DE)
(74) Vertreter: Oelke, Jochen
(86) Internationale Anmeldenummer: PCT/EP2017/000658
(87) Internationale Veröffentlichungsnummer: WO 2017/220185

(56) Entgegenhaltungen:
- EP-A1- 3 017 920
- DE-A1-102004 041 821
- DE-U1-202013 104 860
- US-A1- 2014 330 433

## Beschreibung

Die vorliegende Erfindung betrifft ein System mit einer Roboteranordnung und einer Sicherheitssteuerung zum Überwachen der Roboteranordnung, ein Verfahren zum Steuern des Systems sowie ein Computerprogrammprodukt zur Durchführung des Verfahrens.

Insbesondere zur Personensicherheit arbeiten Großroboter üblicherweise in umzäunten Arbeitszellen und werden stillgesetzt, falls eine Person die Arbeitszelle betritt. Dies steht insbesondere einer flexiblen Mensch-Roboter-Kooperation entgegen. Die DE 102004041821 A1 offenbart eine Vorrichtung und ein Verfahren zur Sicherung eines maschinell gesteuerten Handhabungsgeräts mittels berührungslosen Näherungssensoren, d.h. Ultraschall- oder Mikrowellensensoren, mit der die Umgebung des Handhabungsgerätes sektorenweise überwacht werden kann. Die DE 202013104860 U1 offenbart eine Arbeitsvorrichtung mit einer Sensoreinrichtung zur berührungslosen Abstandsmessung, z.B. einer 3D-Kamera.

Die US 2014/0330433 A1 offenbart eine mobile Arbeitsplattform zur automatisierten Bearbeitung von großen Werkstücken, wie z.B. Flugzeugteilen, bei der ebenfalls durch Näherungssensorik die Position des Werkstücks oder interagierender Personen bestimmt wird.

Aufgabe der vorliegenden Erfindung ist es, den Betrieb von Robotern zu verbessern. Diese Aufgabe wird durch ein System mit den Merkmalen des Anspruchs 1 gelöst.

Ansprüche 5 und 12 stellen ein Verfahren zum Steuern eines hier beschriebenen Systems bzw. ein Computerprogrammprodukt zur Durchführung eines hier beschriebenen Verfahrens unter Schutz. Die Unteransprüche betreffen vorteilhafte Weiterbildungen.

Nach einer Ausführung der vorliegenden Erfindung weist ein System eine Roboteranordnung mit einem oder mehreren Robotern auf, wobei in einer Ausführung der bzw. ein oder mehrere der Roboter (jeweils) wenigstens vier, insbesondere wenigstens sechs, insbesondere wenigstens sieben, Gelenke bzw. (Bewegungs)Achsen aufweisen, insbesondere durch Antriebe, insbesondere Elektromotoren, aktuierte Achsen, insbesondere Drehachsen bzw. -gelenke. Vorzugsweise sind der bzw. ein oder mehrere der Roboter Industrie- bzw. Großroboter, die in einer Ausführung eine maximale Traglast von wenigstens 100 kg, insbesondere wenigstens 250 kg, aufweisen.

Nach einer Ausführung der vorliegenden Erfindung weist das System eine (Roboter)Steuerung zum Steuern der Roboteranordnung, insbesondere zum Vorgeben und/oder Umsetzen von Soll-Bewegungen und/oder Steuern von Antrieben der Roboteranordnung und/oder, insbesondere robotergeführten und/oder umgebungsfesten, Werkzeugen, insbesondere zum Fügen, Bearbeiten und/oder Transportieren, beispielsweise robotergeführten Greifern oder auch umgebungsfesten Förderbändern oder dergleichen, auf. Die Steuerung kann insbesondere eine (Einzel- bzw. zentrale) Steuerung zum Steuern des bzw. mehrerer der Roboter oder auch eine dezentrale Steuerung mit mehreren Teil-, insbesondere Einzelsteuerungen sein, die jeweils Roboter der Roboteranordnung steuern bzw. hierzu eingerichtet sind. Zur kompakteren Darstellung wird vorliegend auch ein Regeln, d.h. die Vorgabe von Stellgrößen auf Basis von rückgeführten Messgrößen, verallgemeinernd als Steuern bezeichnet.

Nach einer Ausführung der vorliegenden Erfindung weist das System eine Sensoranordnung mit einem oder mehrere, insbesondere berührungslos( erfassenden, Sensoren auf, die Hindernisse in wenigstens einem Teil eines Arbeitsbereichs der Roboteranordnung, insbesondere innerhalb des gesamten Arbeitsbereichs, erfassen bzw. hierzu eingerichtet sind. Unter einem Arbeitsbereich wird vorliegend insbesondere ein, insbesondere kartesischer oder Gelenk(koordinaten)raum verstanden, den die Roboteranordnung, insbesondere maximal, anfahren bzw. überstreichen bzw. erreichen kann.

Nach einer Ausführung der vorliegenden Erfindung weist das System eine Sicherheitssteuerung auf, die die Roboteranordnung auf Basis bzw. in Abhängigkeit von einem Abstand zwischen einem oder mehreren erfassten Hindernissen in dem Arbeitsraum und der Roboteranordnung und/oder einem Abstand zwischen einem oder mehreren erfassten Hindernissen in dem Arbeitsraum und einem Prozessbereich der Roboteranordnung und/oder auf Basis bzw. in Abhängigkeit von einer zeitlichen Änderung dieses Abstandes überwacht bzw. hierzu, insbesondere hard- und/oder software-, insbesondere programmtechnisch, eingerichtet ist.

Ein Abstand im Sinne der vorliegenden Erfindung kann insbesondere ein kartesischer Abstand im zwei- oder dreidimensionalen Raum, insbesondere eine zwei- oder dreidimensionale (Relativ)Position relativ zu einem Referenzsystem sein, ein Abstand zwischen einem Hindernis und der Roboteranordnung insbesondere ein kartesischer Abstand, insbesondere eine (Relativ)Position, des Hindernisses (relativ) zu einem, insbesondere hindernisnächsten und/oder, insbesondere in Richtung auf das Hindernis, beweglichen Glied (eines, insbesondere hindernisnächsten, Roboters) der Roboteranordnung. Hierdurch kann insbesondere eine relevante(ste) Gefährdung berücksichtigt werden.

In einer Ausführung ist die Sicherheitssteuerung in die (Roboter)Steuerung zum Steuern der Roboteranordnung integriert. Hierdurch kann in einer Ausführung eine Kommunikation zwischen den beiden Steuerungen verbessert werden. In einer anderen Ausführung sind die Sicherheitssteuerung und die (Roboter)Steuerung zum Steuern der Roboteranordnung separat ausgebildet und miteinander signal- bzw. datentechnisch verbunden. Hierdurch kann die Sicherheitssteuerung in einer Ausführung wahlweise mit verschiedenen Robotersteuerungen bzw. -anordnungen verwendet werden. In einer Ausführung ist die Sicherheitssteuerung in sicherer Technik, insbesondere redundant, insbesondere diversitär, ausgebildet, insbesondere mit der Sensoranordnung signal- bzw. datenverbunden, wobei in einer Weiterbildung die (übrige bzw. Roboter)Steuerung zum Steuern der Roboteranordnung in nicht sicherer Technik ausgebildet sein kann.

Der Prozessbereich der Roboteranordnung kann in einer Ausführung ein(en) Wirkbzw. Arbeitsbereich eines oder mehrerer, insbesondere robotergeführter, Werkzeuge des Systems umfassen, insbesondere sein, in dem diese bei einem Betrieb der Roboteranordnung, insbesondere Durchführen eines, insbesondere vorgegebenen bzw. programmierten, (Arbeits)Prozesses des Systems bzw. der Roboteranordnung eine physikalische Wirkung ausüben (können), insbesondere ein Strahlengang eines robotergeführten Lasers, eine Umhüllende eines robotergeführten Bohrers, ein Benetzungsvolumen eines robotergeführten Klebe- oder Farbkopfes oder dergleichen. In einer Ausführung weist die Sensoranordnung einen oder mehrere Sensoren, nämlich einen oder mehrere Radarsensoren, zum Erfassen von Hindernissen in wenigstens einem Teil des Arbeitsbereichs der Roboteranordnung auf, der bzw. die an einer, insbesondere mobilen oder stationären, Basis, insbesondere einer Plattform oder einem Grundgestell, wenigstens eines Roboters der Roboteranordnung angeordnet ist bzw. sind. Durch (roboter)basisfeste Sensoren können diese in einer Ausführung mit der Basis mitbewegt werden, insbesondere mit einer mobilen Basis oder beim Auf- oder Umstellen einer stationären Basis. Zusätzlich oder alternativ kann in einer Ausführung die Bestimmung eines Abstandes zwischen sensorerfassten Hindernissen und einem roboter-, insbesondere basisfesten Referenz- bzw. Bezugs-, insbesondere Koordinatensystem, verbessert werden. Zusätzlich oder alternativ werden in einer Ausführung (roboter)basisfeste Sensoren bei Bewegungen (beweglicher Glieder) des Roboters vorteilhaft geschont.

Die Sensoranordnung weist einen oder mehrere Radarsensoren, zum Erfassen von Hindernissen in wenigstens einem Teil des Arbeitsbereichs der Roboteranordnung auf, der bzw. die an einem oder mehreren beweglichen Glieder wenigstens eines Roboters der Roboteranordnung angeordnet ist bzw. sind. Durch (roboter)gliedfeste Sensoren können diese in einer Ausführung mit dem Glied mitbewegt und so ihr Erfassungsbereich mit dem Roboter bzw. dessen Pose mitgeführt werden. Hierdurch kann in einer Ausführung insbesondere eine jeweils aktuelle bzw. vom Roboter (aktuell bzw. als nächstes) erreichbare Zone seines Arbeitsbereichs und/oder sein Prozessbereich erfasst und damit überwacht werden.

In einer Weiterbildung sind der bzw. ein oder mehrere der Sensor(en) (jeweils) an einem distalen Endglied, insbesondere einem Werkzeugflansch oder daran befestigten Werkzeug oder mit dem Werkzeugflansch starr verbundenen Element, wenigstens eines Roboters der Roboteranordnung angeordnet. Hierdurch können sie vorteilhaft einen Prozessbereich eines robotergeführten Werkzeugs erfassen, der zudem häufig auch einer am weitesten von der Basis entfernten und dadurch oftmals hindernisnächsten aktuell( erreichbaren Zone des Arbeitsbereichs entspricht.

Der bzw. ein oder mehrere der Radarsensor(en) (jeweils) an einem beweglichen Zwischenglied wenigstens eines Roboters der Roboteranordnung angeordnet, das (beweglich) zwischen dessen distalen Endglied und der Basis des Roboters angeordneten ist, insbesondere an einem beweglich, insbesondere drehbar, an der Basis gelagerten Glied, insbesondere Karussell, an einer beweglich, insbesondere drehbar an der Basis oder dem Karussell gelagerten Schwinge, an einem beweglich, insbesondere drehbar, an der Basis, dem Karussell oder der Schwinge gelagerten und/oder das distale Endglied beweglich, insbesondere drehbar, lagernden, (Roboter)Arm und/oder an einer beweglich, insbesondere drehbar, an der Basis, dem Karussel, der Schwinge oder dem Arm gelagerten und/oder das distale Endglied beweglich, insbesondere drehbar, lagernden, ein- oder mehrachsigen (Roboter)Hand. Hierdurch können sie in einer Ausführung
vorteilhaft relevante Zonen, insbesondere einen Prozessbereich eines robotergeführten Werkzeugs, erfassen, ohne Bewegungen eines robotergeführten Werkzeugs signifikant zu beeinflussen, insbesondere eine Kontur des Endglieds zu vergrößern.

Die Sensoranordnung weist in einer Ausführung einen oder mehrere Radarsensoren zum Erfassen von Hindernissen in wenigstens einem Teil des Arbeitsbereichs der Roboteranordnung auf, der bzw. die von der Roboteranordnung beabstandet, insbesondere umgebungsfest, angeordnet sind. Hierdurch können sie in einer Weiterbildung insbesondere einen virtuellen Zaun um die Roboteranordnung (ab)bilden. Unter "umgebungsfest" wird vorliegend insbesondere "unabhängig von Bewegungen der Roboteranordnung" verstanden, insbesondere stationär oder beweglich in einer (inertialen) Umgebung der Roboteranordnung angeordnet.

Umgebungs- und roboter(basis- und/oder zwischen- und/oder endglied)feste Sensoren können vorteilhaft gemeinsam vorgesehen sein, insbesondere, um einerseits einen virtuellen Zaun um die Roboteranordnung (ab)bilden und zusätzlich eine aktuelle Zone des Arbeitsbereichs, insbesondere einen Prozessbereich eines robotergeführten Werkzeugs, erfassen zu können. Dies ermöglicht in einer Weiterbildung eine differenzierte Reaktion auf Hindernisse in Abhängigkeit von den sie erfassenden Sensoren, beispielsweise eine Geschwindigkeitsreduzierung bei Penetrieren des virtuellen Zauns und ein Stillsetzen bei einem Hindernis in einem Prozessbereich eines robotergeführten Werkzeugs.

Umgebungs- sowie roboter(basis- und/oder zwischen- und/oder endglied)feste Radarsensoren werden vorteilhaft nicht durch optische Umgebungsbedingungen wie Schatten, Reflektionen, Nebel, Rauch oder dergleichen gestört. Zusätzlich oder alternativ können Radarsensoren gut sterilisiert werden. Zusätzlich oder alternativ kann durch Radarsensoren auf Basis des Doppler-Effekts, d.h. der Veränderung reflektierter Schallwellen entsprechend einer Relativgeschwindigkeit eines sie reflektierenden Objekts zu einem Schallwellendetektor, in einer Ausführung vorteilhaft eine Geschwindigkeit bzw. zeitliche Änderung eines Abstandes von Hindernissen zur Roboteranordnung bzw. ihrem Prozessbereich erfasst werden.

Umgebungs- sowie roboter(basis- und/oder zwischen- und/oder endglied)feste Radarsensoren werden vorteilhaft nicht durch optische Umgebungsbedingungen wie Schatten, Reflektionen, Nebel, Rauch oder dergleichen gestört. Zusätzlich oder alternativ können Radarsensoren gut sterilisiert werden. Zusätzlich oder alternativ kann durch Radarsensoren auf Basis des Doppler-Effekts, d.h. der Veränderung reflektierter Schallwellen entsprechend einer Relativgeschwindigkeit eines sie reflektierenden Objekts zu einem Schallwellendetektor, in einer Ausführung vorteilhaft eine Geschwindigkeit bzw. zeitliche Änderung eines Abstandes von Hindernissen zur Roboteranordnung bzw. ihrem Prozessbereich erfasst werden.

Der bzw. einer oder mehrere der Radarsensor(en) weist/weisen (jeweils) wenigstens eine Radarlinse zur, insbesondere wahlweisen, Modifikation eines Erfassungsbereichs auf. Diese kann in einer Ausführung eine Polymer-Radarlinse sein, die Radarstrahlen bündeln und/oder einen balken- oder streifen-, insbesondere ringförmigen Erfassungsbereich realisieren kann. In einer Ausführung weist das System ein oder mehrere Radarlinsen auf, die wahlweise montierbar sind bzw. montiert sind bzw. werden. Insbesondere kann in einer Ausführung eine erste Radarlinse durch eine hiervon verschiedene zweite Radarlinse ersetzbar sein bzw. ersetzt werden. Zusätzlich oder alternativ kann in einer Ausführung eine erste Radarlinse wahlweise in Kombination mit einer zweiten Radarlinse oder ohne diese zweite Radarlinse verwendet werden. Hierdurch kann der Erfassungsbereich des entsprechenden Radarsensors jeweils wahlweise modifiziert werden, insbesondere in Abhängigkeit von einer Konfiguration der Roboteranordnung und/oder einem (Arbeits)Prozess, insbesondere verwendeten Werkzeugen oder dergleichen.

In einer Ausführung ist/sind der bzw. einer oder mehrere der Radarsensor(en) (jeweils) unterhalb einer Deck-, insbesondere Lackschicht eines Roboters der Roboteranordnung angeordnet. Hierdurch können diese in einer Ausführung, wenigstens im Wesentlichen, unsichtbar in den Roboter integriert und/oder geschützt werden.

In einer Ausführung weist das System ein Krafterfassungsmittel zum Erfassen von auf die Roboteranordnung wirkenden Kräften auf, das mit der Sicherheitssteuerung zum Überwachen der Roboteranordnung auf Basis erfasster Kräfte, insbesondere in sicherer Technik, daten- bzw. signalverbunden ist. Zur kompakteren Darstellung werden vorliegend auch antiparallele Kräftepaare, d.h. (Dreh)Momente, verallgemeinernd als Kräfte bezeichnet. Ein ein- oder mehrteiliges Krafterfassungsmittel kann somit insbesondere ein(en) oder mehrere Drehmomentsensor(en) umfassen, insbesondere sein. In einer Weiterbildung erfasst ein Krafterfassungsmittel Kräfte, insbesondere also Momente, in einem oder mehreren Gelenken der Roboteranordnung, insbesondere in Getrieben. Hierdurch kann in einer Ausführung eine Reaktion der Sicherheitssteuerung noch besser differenziert und beispielsweise (erst) auf eine auf Basis erfasster Kräfte erfasste Kollision mit einem Stillsetzen reagiert werden.

In einer Ausführung weist ein Verfahren zum Steuern eines hier beschriebenen Systems die Schritte auf:
- Ermitteln eines, insbesondere minimalen, Abstandes wenigstens eines erfassten Hindernisses in dem Arbeitsbereich der Roboteranordnung zu der Roboteranordnung, insbesondere einem, insbesondere dem Hindernis nächsten und/oder, insbesondere in Richtung auf das Hindernis, beweglichen, Roboter(glied), und/oder einem, insbesondere dem Hindernis nächsten, Prozessbereich der Roboteranordnung; und
- Auslösen einer Sicherheitsreaktion, falls der Abstand einen vorgegebenen Mindestabstand unterschreitet.

Entsprechend weist das System, insbesondere die Sicherheitssteuerung, in einer Ausführung auf:
- Mittel zum Ermitteln eines, insbesondere minimalen, Abstandes wenigstens eines erfassten Hindernisses in dem Arbeitsbereich der Roboteranordnung zu der Roboteranordnung, insbesondere einem, insbesondere dem Hindernis nächsten und/oder, insbesondere in Richtung auf das Hindernis, beweglichen, Roboter(glied), und/oder einem, insbesondere dem Hindernis nächsten, Prozessbereich der Roboteranordnung; und
- Mittel zum Auslösen einer Sicherheitsreaktion, falls der Abstand einen vorgegebenen Mindestabstand unterschreitet.

In einer Ausführung umfasst die Sicherheitsreaktion ein Reduzieren einer Geschwindigkeit der Roboteranordnung, insbesondere so bzw. derart, dass ein geschwindigkeitsabhängiger Bremsweg der Roboteranordnung kleiner als der, insbesondere kleinste, Abstand zu dem, insbesondere nächsten, erfassten Hindernis im Arbeitsbereich ist. Entsprechend umfasst in einer Weiterbildung das Verfahren die Schritte: Ermitteln eines, insbesondere prognostizierten und/oder maximalen, Bremswegs der Roboteranordnung in Abhängigkeit bzw. auf Basis von einer, insbesondere aktuellen und/oder erfassten, Geschwindigkeit der Roboteranordnung, und Reduzieren einer, insbesondere Soll- bzw. kommandierten, Geschwindigkeit der Roboteranordnung so bzw. derart, dass dieser Bremsweg kleiner als der, insbesondere kleinste, ermittelte Abstand zu dem, insbesondere nächsten, erfassten Hindernis im Arbeitsbereich ist bzw. wird.

Zusätzlich oder alternativ zu einem Reduzieren einer Geschwindigkeit umfasst die Sicherheitsreaktion in einer Ausführung ein Anfahren einer, insbesondere vorgegebenen, Sicherheitspose der Roboteranordnung, insbesondere mit reduzierter Geschwindigkeit und/oder anschließendem Stillsetzen der Roboteranordnung in der Sicherheitspose.

Zusätzlich oder alternativ zu einem Reduzieren einer Geschwindigkeit und/oder einem Anfahren einer Sicherheitspose umfasst die Sicherheitsreaktion in einer Ausführung ein Erhöhen einer regelungstechnischen Nachgiebigkeit der Roboteranordnung und/oder ein Verändern eines Prozesses der Roboteranordnung, insbesondere ein Reduzieren eines Prozessbereichs und/oder einer Leistung eines, insbesondere robotergeführten, Werkzeugs wie beispielsweise einer Laser- oder Bohrerleistung.

In einer Ausführung umfasst das Verfahren die Schritte:
- Reduzieren einer Soll-Geschwindigkeit der Roboteranordnung, falls der Abstand den vorgegebenen Mindestabstand unterschreitet; und
- Stillsetzen der Roboteranordnung, Anfahren einer Sicherheitspose der Roboteranordnung und/oder Erhöhen einer regelungstechnischen Nachgiebigkeit der Roboteranordnung, falls die Roboteranordnung die Soll-Geschwindigkeit überschreitet;
   und/oder die Schritte
- Verändern des Prozesses der Roboteranordnung, falls der Abstand den vorgegebenen Mindestabstand unterschreitet; und
- Deaktivieren des Prozesses, falls der Abstand zusätzlich einen vorgegebenen weiteren Mindestabstand unterschreitet.

Entsprechend weist das System, insbesondere die Sicherheitssteuerung, in einer Ausführung auf:
- Mittel zum Reduzieren einer Soll-Geschwindigkeit der Roboteranordnung, falls der Abstand den vorgegebenen Mindestabstand unterschreitet; und
- Mittel zum Stillsetzen der Roboteranordnung, Anfahren einer Sicherheitspose der Roboteranordnung und/oder Erhöhen einer regelungstechnischen Nachgiebigkeit der Roboteranordnung, falls die Roboteranordnung die Soll-Geschwindigkeit überschreitet;
   und/oder
- Mittel zum Verändern des Prozesses der Roboteranordnung, falls der Abstand den vorgegebenen Mindestabstand unterschreitet; und
- Mittel zum Deaktivieren des Prozesses, falls der Abstand zusätzlich einen vorgegebenen weiteren Mindestabstand unterschreitet.

Insbesondere kann so eine abgestufte Sicherheitsreaktion in Abhängigkeit von der aktuellen Situation erfolgen, indem, insbesondere zunächst und/oder in nicht sicherer Technik, die (kommandierte) Soll-Geschwindigkeit reduziert bzw. der Prozess verändert wird, und, insbesondere erst und/oder in sicherer Technik, entsprechend reagiert, insbesondere die Roboteranordnung stillgesetzt, die Sicherheitspose angefahren, die regelungstechnischen Nachgiebigkeit erhöht bzw. der Prozess deaktiviert werden, falls dies nicht ausreicht.

In einer Ausführung erfasst die Sensoranordnung, insbesondere ein oder mehrere umgebungsfeste Sensoren, einen, insbesondere für Menschen, zugänglichen bzw. nicht durch umgebungsfeste Elemente besetzten, Teil einer geschlossenen Kontur, insbesondere eines Drei-, Vier- oder Mehrecks, einer Ellipse, insbesondere eines Kreises, eines, insbesondere nach oben offenen oder geschlossenen, Kegels, Zylinders, insbesondere Kreiszylinders, drei-, vier- oder mehreckigen Rahmens, oder dergleichen um die Roboteranordnung vollständig. Hierdurch kann ein virtuell( geschlossener Zaun um die Roboteranordnung auf ein Eindringen von Hindernissen, insbesondere Menschen, überwacht werden.

In einer Ausführung umfasst das Verfahren die Schritte:
- Erfassen (des Vorhandenseins) von Hindernissen in einer von mehreren Zonen des Arbeitsbereichs der Roboteranordnung; und
- Auslösen einer zonenspezifischen Sicherheitsreaktion in Abhängigkeit von einer Zone des Arbeitsbereichs, in der ein Hindernis erfasst wird,
insbesondere die Schritte:
- Erfassen (des Vorhandenseins) von Hindernissen in einer ersten Zone des Arbeitsbereichs der Roboteranordnung;
- Erfassen (des Vorhandenseins) von Hindernissen in einer hiervon verschiedenen zweiten Zone des Arbeitsbereichs der Roboteranordnung;
- Auslösen einer ersten Sicherheitsreaktion falls ein (Vorhandensein wenigstens eines) Hindernis(ses) in der ersten Zone erfasst wird, und
- zusätzlich oder alternativ, Auslösen einer hiervon verschiedenen zweiten Sicherheitsreaktion falls ein (Vorhandensein wenigstens eines) Hindernis(ses) in der zweiten Zone erfasst wird.

Entsprechend weist das System, insbesondere die Sicherheitssteuerung, in einer Ausführung auf:
- Mittel zum Erfassen (des Vorhandenseins) von Hindernissen in einer von mehreren Zonen des Arbeitsbereichs der Roboteranordnung; und
- Mittel zum Auslösen einer zonenspezifischen Sicherheitsreaktion in Abhängigkeit
von einer Zone des Arbeitsbereichs, in der ein Hindernis erfasst wird, insbesondere:
- Mittel zum Erfassen (des Vorhandenseins) von Hindernissen in einer ersten Zone des Arbeitsbereichs der Roboteranordnung;
- Mittel zum Erfassen (des Vorhandenseins) von Hindernissen in einer hiervon verschiedenen zweiten Zone des Arbeitsbereichs der Roboteranordnung;
- Mittel zum Auslösen einer ersten Sicherheitsreaktion falls ein (Vorhandensein wenigstens eines) Hindernis(ses) in der ersten Zone erfasst wird, und
- Mittel zum zusätzlichen oder alternativen Auslösen einer hiervon verschiedenen zweiten Sicherheitsreaktion falls ein (Vorhandensein wenigstens eines) Hindernis(ses) in der zweiten Zone erfasst wird.

Hierdurch kann in einer Ausführung differenzierter auf Hindernisse reagiert, beispielsweise nur ein Geschwindigkeit der Roboteranordnung, insbesondere um einen ersten Faktor, reduziert und/oder ein Prozess der Roboteranordnung verändert werden, falls Hindernisse (nur) in einer ersten Zone des Arbeitsbereichs erfasst werden (und somit einen ersten Abstand zu der Roboteranordnung bzw. einem Prozessbereich aufweisen), und die Geschwindigkeit der Roboteranordnung, um einen zweiten Faktor stärker reduziert oder die Roboteranordnung stillgesetzt und/oder der Prozess deaktiviert werden, falls Hindernisse (auch) in einer zweiten Zone des Arbeitsbereichs erfasst werden (und somit einen, insbesondere kleineren, zweiten Abstand zu der Roboteranordnung bzw. einem Prozessbereich aufweisen).

In einer Ausführung umfasst das Verfahren den Schritt: Ermitteln von Hindernissen, insbesondere Hindernisabständen, insbesondere in wenigstens einer, insbesondere roboterfesten, insbesondere (roboter)basis-, (roboter)zwischen- oder (roboter)endgliedfesten, Zone des Arbeitsbereichs der Roboteranordnung, mittels unterschiedlicher Sensoren der Sensoranordnung in Abhängigkeit von einer Pose der Roboteranordnung, insbesondere die Schritte: Ermitteln von Hindernissen, insbesondere Hindernisabständen, in einer ersten Zone des Arbeitsbereichs der Roboteranordnung mittels eines oder mehrerer erster Sensoren der Sensoranordnung, falls die Roboteranordnung eine erste Pose aufweist, und Ermitteln von Hindernissen, insbesondere Hindernisabständen, in einer zweiten Zone des Arbeitsbereichs der Roboteranordnung mittels eines oder mehrerer zweiter Sensoren der Sensoranordnung, falls die Roboteranordnung eine zweite Pose aufweist.

Entsprechend weist das System, insbesondere die Sicherheitssteuerung, in einer Ausführung auf Mittel zum Ermitteln von Hindernissen, insbesondere Hindernisabständen, insbesondere in wenigstens einer, insbesondere roboterfesten, insbesondere (roboter)basis-, (roboter)zwischen- oder (roboter)endgliedfesten, Zone des Arbeitsbereichs der Roboteranordnung, mittels unterschiedlicher Sensoren der Sensoranordnung in Abhängigkeit von einer Pose der Roboteranordnung, insbesondere Mittel zum Ermitteln von Hindernissen, insbesondere Hindernisabständen, in einer ersten Zone des Arbeitsbereichs der Roboteranordnung mittels eines oder mehrerer erster Sensoren der Sensoranordnung, falls die Roboteranordnung eine erste Pose aufweist, und Ermitteln von Hindernissen, insbesondere Hindernisabständen, in einer zweiten Zone des Arbeitsbereichs der Roboteranordnung mittels eines oder mehrerer zweiter Sensoren der Sensoranordnung, falls die Roboteranordnung eine zweite Pose aufweist.

Insbesondere können dadurch in einer Ausführung je nach Pose der Roboteranordnung jeweils solche Sensoren der Sensoranordnung genutzt, insbesondere aktiviert und/oder deren Erfassungen berücksichtigt, werden, die eine aktuelle bzw. von der Roboteranordnung (als nächstes) erreichbare und somit roboter(basis- bzw. glied)feste bzw. mit der Roboteranordnung mitbewegte Zone des Arbeitsbereichs erfassen (können).

In einer Weiterbildung werden entsprechend Hindernisse, insbesondere Hindernisabstände, (jeweils) mittels eines oder mehrerer derjenigen Sensoren der Sensoranordnung ermittelt, in dessen bzw. deren Erfassungsbereich ein vorgegebener Referenzpunkt, insbesondere ein TCP oder ein Punkt eines beweglichen Zwischenglieds, eines Roboters der Roboteranordnung sich aktuell befindet und/oder auf den sich der Referenzpunkt zubewegt. In einer Ausführung werden somit Hindernisse, insbesondere Hindernisabstände, mittels eines oder mehrerer erster Sensoren der Sensoranordnung ermittelt, falls sich ein vorgegebener Referenzpunkt, insbesondere ein TCP oder ein Punkt eines Zwischenglieds, eines Roboters der Roboteranordnung aktuell in dessen bzw. deren Erfassungsbereich befindet und/oder auf diesen Erfassungsbereich zubewegt, und Hindernisse, insbesondere Hindernisabstände, (zusätzlich oder alternativ) mittels eines oder mehrerer hiervon verschiedener zweiter Sensoren der Sensoranordnung ermittelt, falls sich der Referenzpunkt aktuell in dessen bzw. deren Erfassungsbereich befindet und/oder auf diesen Erfassungsbereich zubewegt.

Entsprechend weist das System, insbesondere die Sicherheitssteuerung, in einer Ausführung auf Mittel zum Ermitteln von Hindernissen, insbesondere Hindernisabständen, (jeweils) mittels eines oder mehrerer derjenigen Sensoren der Sensoranordnung, in dessen bzw. deren Erfassungsbereich ein vorgegebener Referenzpunkt, insbesondere ein TCP oder ein Punkt eines beweglichen Zwischenglieds, eines Roboters der Roboteranordnung sich aktuell befindet und/oder auf den sich der Referenzpunkt zubewegt, insbesondere Mittel zum Ermitteln von Hindernissen, insbesondere Hindernisabständen, mittels eines oder mehrerer erster Sensoren der Sensoranordnung, falls sich ein vorgegebener Referenzpunkt, insbesondere ein TCP oder ein Punkt eines Zwischenglieds, eines Roboters der Roboteranordnung aktuell in dessen bzw. deren Erfassungsbereich befindet und/oder auf diesen Erfassungsbereich zubewegt, und mittels eines oder mehrerer hiervon verschiedener zweiter Sensoren der Sensoranordnung, falls sich der Referenzpunkt aktuell in dessen bzw. deren Erfassungsbereich befindet und/oder auf diesen Erfassungsbereich zubewegt.

In einer Weiterbildung werden ein oder mehrere Sensoren der Sensoranordnung in Abhängigkeit von einer Pose der Roboteranordnung aktiviert und/oder deaktiviert, insbesondere ein oder mehrere Sensoren aktiviert, falls sich ein vorgegebener Referenzpunkt, insbesondere ein TCP oder ein Punkt eines beweglichen Zwischenglieds, eines Roboters der Roboteranordnung in dessen bzw. deren (potentiellem) Erfassungsbereich befindet und/oder auf diesen Erfassungsbereich zubewegt, und/oder deaktiviert, falls der Referenzpunkt sich nicht mehr in diesem Erfassungsbereich befindet.

Entsprechend weist das System, insbesondere die Sicherheitssteuerung, in einer Ausführung auf Mittel zum Aktivieren und/oder Deaktivieren eines oder mehrerer Sensoren der Sensoranordnung in Abhängigkeit von einer Pose der Roboteranordnung, insbesondere zum Aktivieren eines oder mehrerer Sensoren, falls sich ein vorgegebener Referenzpunkt, insbesondere ein TCP oder ein Punkt eines beweglichen Zwischenglieds, eines Roboters der Roboteranordnung in dessen bzw. deren (potentiellem) Erfassungsbereich befindet und/oder auf diesen Erfassungsbereich zubewegt, und/oder Deaktivieren, falls der Referenzpunkt sich nicht mehr in diesem Erfassungsbereich befindet.

In einer Ausführung umfasst das Verfahren die Schritte:
- Erfassen von auf die Roboteranordnung wirkenden Kräften; und
- Auslösen einer Sicherheitsreaktion, insbesondere Reduzieren einer Geschwindigkeit der Roboteranordnung, insbesondere Stillsetzen der Roboteranordnung, Anfahren einer Sicherheitspose der Roboteranordnung, Erhöhen einer regelungstechnischen Nachgiebigkeit der Roboteranordnung und/oder Verändern eines Prozesses der Roboteranordnung, falls wenigstens eine erfasste Kraft einen vorgegebenen Maximalwert überschreitet.

Entsprechend weist das System, insbesondere die Sicherheitssteuerung, in einer Ausführung auf:
- Mittel zum Erfassen von auf die Roboteranordnung wirkenden Kräften; und
- Mittel zum Auslösen einer Sicherheitsreaktion, insbesondere Reduzieren einer Geschwindigkeit der Roboteranordnung, insbesondere Stillsetzen der Roboteranordnung, Anfahren einer Sicherheitspose der Roboteranordnung, Erhöhen einer regelungstechnischen Nachgiebigkeit der Roboteranordnung und/oder Verändern eines Prozesses der Roboteranordnung, falls wenigstens eine erfasste Kraft einen vorgegebenen Maximalwert überschreitet.

Insbesondere kann in einer Ausführung eine Geschwindigkeit der Roboteranordnung reduziert werden, falls ein Abstand eines erfassten Hindernisses einen vorgegebenen Mindestwert unterschreitet, und die Roboteranordnung stillgesetzt werden, falls eine infolge einer Kollision mit dem Hindernis erfasste auf die Roboteranordnung wirkende Kraft einen vorgegebenen Maximalwert überschreitet. Somit kann wiederum noch differenzierter auf die aktuelle Situation reagiert werden.

Ein Mittel im Sinne der vorliegenden Erfindung kann hard- und/oder softwaretechnisch ausgebildet sein, insbesondere eine, vorzugsweise mit einem Speicher- und/oder Bussystem daten- bzw. signalverbundene, insbesondere digitale, Verarbeitungs-, insbesondere Mikroprozessoreinheit (CPU) und/oder ein oder mehrere Programme oder Programmmodule aufweisen. Die CPU kann dazu ausgebildet sein, Befehle, die als ein in einem Speichersystem abgelegtes Programm implementiert sind, abzuarbeiten, Eingangssignale von einem Datenbus zu erfassen und/oder Ausgangssignale an einen Datenbus abzugeben. Ein Speichersystem kann ein oder mehrere, insbesondere verschiedene, Speichermedien, insbesondere optische, magnetische, Festkörper- und/oder andere nicht-flüchtige Medien aufweisen. Das Programm kann derart beschaffen sein, dass es die hier beschriebenen Verfahren verkörpert bzw. auszuführen imstande ist, sodass die CPU die Schritte solcher Verfahren ausführen kann und damit insbesondere die Roboteranordnung steuern kann.

In einer Ausführung werden ein oder mehrere, insbesondere alle, Schritte des Verfahrens vollständig oder teilweise automatisiert durchgeführt, insbesondere durch die Steuerung bzw. ihr(e) Mittel.

Weitere Vorteile und Merkmale ergeben sich aus den Unteransprüchen und den Ausführungsbeispielen. Hierzu zeigt, teilweise schematisiert,:
- Fig. 1:: ein System nach einer Ausführung der vorliegenden Erfindung mit einem Roboter in einer ersten Pose und Erfassungsbereichen von Radarsensoren;
- Fig. 2:: das System mit dem Roboter in einer zweiten Pose und Erfassungsbereichen anderer Radarsensoren; und
- Fig. 3:: ein Verfahren zum Steuern des Systems nach einer Ausführung der vorliegenden Erfindung.

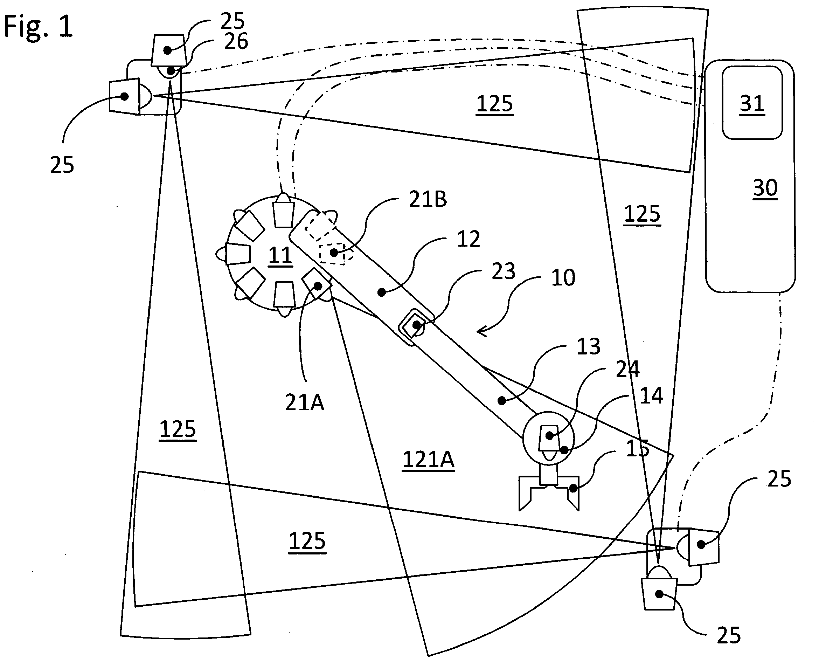

Fig. 1 zeigt ein System nach einer Ausführung der vorliegenden Erfindung mit einem Roboter 10 und einer Robotersteuerung 30 zum Steuern des Roboters 10, in die eine Sicherheitssteuerung 31 zum Überwachen des Roboters 10 auf Basis eines Abstandes zwischen Hindernissen und dem Roboter 10 und/oder einem Wirkbereich seines Greifers 15 integriert ist, die durch eine Sensoranordnung erfasst werden.

Der Roboter 10 weist eine stationäre Basis 11, ein zur Verdeutlichung ausgeblendetes Karussell, das hieran drehbar gelagert ist, eine drehbar an dem Karussell gelagerte Schwinge 12, einen drehbar an der Schwinge gelagerten Roboterarm 13 und eine daran drehbar gelagerte mehrachsige Roboterhand 14 mit einem distalen Endglied in Form eines Werkzeugflanschs auf, an dem der Greifer 15 befestigt ist.

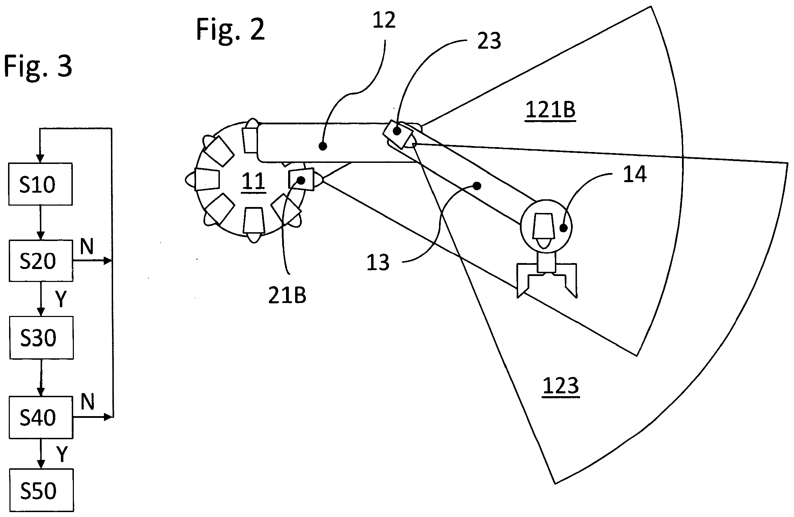

An der Basis 11 sind über ihren Umfangs verteilt mehrere basisfeste Radarsensoren angeordnet, von denen in Fig. 1 exemplarisch ein in der dargestellten Pose aktivierter erster Radarsensor 21A und ein (in der in Fig. 2 dargestellten Pose aktivierter) zweiter Radarsensor 21B gekennzeichnet sind. An dem Roboterarm 13 ist ein weiterer Radarsensor 23 und an der Roboterhand 14 ein weiterer Radarsensor 24 angeordnet. In einer nicht dargestellten Abwandlung kann zusätzlich oder alternativ an der Schwinge 12 ein weiterer Radarsensor angeordnet sein.

Zudem weist die Sensoranordnung mehrere umgebungsfeste Radarsensoren 25 auf, die eine geschlossene Kontur um den Roboter 10 vollständig erfassen, wie durch deren eingezeichnete, einander teilweise überschneidende Erfassungsbereiche 125 angedeutet. In entsprechender Weise sind in Fig. 1, 2 auch der Erfassungsbereich 121A des Radarsensors 21A, der Erfassungsbereich 121B des Radarsensors 21B und der Erfassungsbereich 123 des Radarsensors 23 angedeutet.

Die Erfassungsbereiche werden bedarfsweise durch Radarlinsen 26 in der angedeuteten Weise gebündelt.

Der Roboter 10 ist mit der Robotersteuerung 30 signal- bzw. datenverbunden, die (Sensoren der) Sensoranordnung mit der Sicherheitssteuerung 31, wie in Fig. 1 strichpunktiert angedeutet. Zudem ist die Sicherheitssteuerung 31 mit Drehmomentsensoren in Getrieben der Gelenke des Roboters 10 signal- bzw. datenverbunden.

Die Robotersteuerung 30, insbesondere ihre Sicherheitssteuerung 31, führt ein nachfolgend mit Bezug auf Fig. 3 erläutertes Verfahren zum Steuern des Systems nach einer Ausführung der vorliegenden Erfindung durch.

In einem Schritt S10 ermittelt die Sicherheitssteuerung 31, wo sich der TCP des Roboters 10 befindet, und ermittelt mittels derjenigen Radarsensoren, in deren Erfassungsbereich sich der TCP aktuell befindet, ob sich in diesem Erfassungsbereich ein Hindernis befindet.

Dies ist rein exemplarisch in der Zusammenschau der Fig. 1, 2 angedeutet: in der in Fig. 1 gezeigten Pose des Roboters 10 berücksichtigt die Sicherheitssteuerung Erfassungsergebnisse des Radarsensors 21A, in der Fig. 2 gezeigten Pose hingegen Erfassungsergebnisse des Radarsensors 21B. Auf diese Weise werden Hindernisse in einer bezüglich der Hand 14 festen bzw. mit dieser mitbewegten Zone des Arbeitsraums mittels unterschiedlicher Sensoren 21A, 21B in Abhängigkeit von der Pose des Roboters 10 ermittelt. In einer Abwandlung berücksichtigt die Sicherheitssteuerung aufgrund der in Fig. 1 gezeigten Stellung der Schwinge 12 Erfassungsergebnisse des Radarsensors 21A, aufgrund der in Fig. 2 gezeigten Stellung hingegen Erfassungsergebnisse des Radarsensors 21B, so dass Hindernisse in einer bezüglich der Schwinge 12 festen bzw. mit dieser mitbewegten Zone des Arbeitsraums wiederum mittels der unterschiedlichen Sensoren 21A, 21B in Abhängigkeit von der Pose des Roboters 10 ermittelt werden.

Außerdem berücksichtigt die Sicherheitssteuerungen in der in Fig. 1 gezeigten Pose des Roboters 10 zusätzlich Erfassungsergebnisse der Radarsensoren 25, in der Fig. 2 gezeigten Pose zusätzlich Erfassungsergebnisse des Radarsensors 23.

Dies ist rein exemplarisch, um zu verdeutlichen, dass Hindernissen in einer, insbesondere roboterfesten (vgl. entsprechende Abschnitte der Erfassungsbereiche 121A, 121B und 122), Zone des Arbeitsbereichs des Roboters bzw. verschiedenen umgebungsfesten Zone des Arbeitsbereichs mittels unterschiedlicher Sensoren (21A, 25) und (21B, 23) der Sensoranordnung in Abhängigkeit von einer Pose (vgl. Fig. 1, Fig. 2) des Roboters 10 ermittelt werden. Zudem verdeutlicht Fig. 1 rein exemplarisch das Zusammenwirken von umgebungs- und roboterfest( angeordneten Radarsensoren 25, 21A sowie - ebenso wie Fig. 2 - das Erfassen von Hindernissen in verschiedenen Zonen des Arbeitsbereichs.

Nicht berücksichtigte Radarsensoren (beispielsweise die in Fig. 1, 2 nicht mit einem Bezugszeichen gekennzeichneten weiteren basisfesten Radarsensoren) können zur Reduzierung einer Radarstrahlenbelastung posenabhängig deaktiviert werden.

In einem Schritt S20 ermittelt die Sicherheitssteuerung 31 mittels der jeweiligen Sensoren (21A, 25 in der Pose der Fig. 1 bzw. 21B, 23 in der Pose der Fig. 2) Abstände von Hindernissen in dem Arbeitsbereich des Roboters.

Unterschreiten diese einen vorgegebenen Mindestabstand (S20: "Y"), fährt die Sicherheitssteuerung 31 bzw. das Verfahren mit Schritt S30 fort, andernfalls (S20: "N") setzt sie die Ermittlung der posenabhängig zu berücksichtigenden Radarsensoren (Schritt S10) und die Abstandsermittlung mittels dieser (Schritt S20) fort.

In Schritt S30 reduziert die Sicherheitssteuerung 31 eine kartesische Soll-Geschwindigkeit des TCPs des Roboters, die die Robotersteuerung 30 kommandiert. Zusätzlich oder alternativ kann sie in einer Abwandlung eine Laserleistung eines robotergeführten Laser(kopfe)s reduzieren.

In einem Schritt S40 prüft die Sicherheitssteuerung 31, ob die kommandierte (reduzierte) Soll-Geschwindigkeit überschritten wird (S40: "Y") oder nicht (S40: "N").

Ist dies der Fall (S40: "Y"), setzt sie den Roboter 10 in einem Schritt S50 sicher still und/oder deaktiviert in der Abwandlung den Laser(kopf), andernfalls kehrt sie zu Schritt S10 zurück.

Zusätzlich oder alternativ kann die Sicherheitssteuerung 31 in Schritt S40 prüfen, ob der Abstand einen vorgegebenen kleineren Mindestabstand unterschreitet und/oder auf den Roboter wirkende Kräften, die mittels der Drehmomentsensoren erfasst werden, einen vorgegebenen Maximalwert überschreiten, und auch in diesem Fall (S40: "Y") den Roboter 10 in Schritt S50 sicher stillsetzen und/oder den Laser(kopf) deaktivieren.

In einer Abwandlung reduziert die Sicherheitssteuerung 31 in Schritt S30 die Geschwindigkeit des Roboters 10, falls die Sensoren 25 ein Hindernis in einer ersten, äußeren Zone des Arbeitsbereichs des Roboters erfassen, die durch die Erfassungsbereiche 125 abgedeckt ist (S20: "Y"), und setzt den Roboter in Schritt S50 still, falls in Schritt S40 festgestellt wird, dass auch der Sensor 21A ein Hindernis in einer zweiten, inneren Zone des Arbeitsbereichs des Roboters erfasst, die durch den Erfassungsbereich 121A abgedeckt ist (S40: "Y").

Obwohl in der vorhergehenden Beschreibung exemplarische Ausführungen erläutert wurden, sei darauf hingewiesen, dass eine Vielzahl von Abwandlungen möglich ist. Außerdem sei darauf hingewiesen, dass es sich bei den exemplarischen Ausführungen lediglich um Beispiele handelt, die den Schutzbereich, die Anwendungen und den Aufbau in keiner Weise einschränken sollen. Vielmehr wird dem Fachmann durch die vorausgehende Beschreibung ein Leitfaden für die Umsetzung von mindestens einer exemplarischen Ausführung gegeben, wobei diverse Änderungen, insbesondere in Hinblick auf die Funktion und Anordnung der beschriebenen Bestandteile, vorgenommen werden können, ohne den Schutzbereich zu verlassen, wie er sich aus den Ansprüchen ergibt.

### Bezugszeichenliste

- 10: Roboter(anordnung)
- 11: Basis
- 12: Schwinge
- 13: Roboterarm
- 14: Roboterhand
- 15: Greifer
- 21A, 21B: basisfeste Radarsensoren
- 23: armfester Radarsensor
- 24: handfester Radarsensor
- 25: umgebungsfester Radarsensor
- 26: Radarlinse
- 30: Robotersteuerung
- 31: Sicherheitssteuerung
- 121A, - 125: Erfassungsbereich

## Patentansprüche

1. System mit
- einer Roboteranordnung, die wenigstens einen Roboter (10) aufweist, und
- einer Steuerung (30) zum Steuern der Roboteranordnung,
- eine Sensoranordnung (21A, 21B, 23, 24, 25) zum Erfassen von Hindernissen in wenigstens einem Teil eines Arbeitsbereichs der Roboteranordnung; und
- eine Sicherheitssteuerung (31) zum Überwachen der Roboteranordnung auf Basis eines Abstandes zwischen wenigstens einem erfassten Hindernis und der Roboteranordnung und/oder einem Prozessbereich der Roboteranordnung und/oder einer zeitlichen Änderung dieses Abstandes **dadurch gekennzeichnet, dass** die Sensoranordnung
- wenigstens einen Radarsensor (21A, 21B), aufweist, der an einer Basis (11) eines Roboters (10) der Roboteranordnung angeordnet ist; und
- wenigstens einen Radarsensor (23, 24), aufweist, der an einem beweglichen Glied (13, 24), insbesondere distalen Endglied oder zwischen diesem und der Basis angeordneten Zwischenglied, eines Roboters (10) der Roboteranordnung angeordnet ist,
wobei wenigstens ein Radarsensor wenigstens eine Radarlinse (26) zur wahlweisen Modifikation eines Erfassungsbereichs (121A, 121B, 122, 125) aufweist, wobei der Erfassungsbereich in Abhängigkeit von einer Konfiguration der Roboteranordnung und einem Prozess modifizierbar ist.

2. System nach dem vorhergehenden Anspruch, **dadurch gekennzeichnet, dass** die Sensoranordnung wenigstens einen von der Roboteranordnung beabstandeten, umgebungsfesten Radarsensor (25), aufweist.

3. System nach einem der vorhergehenden Ansprüche, **dadurch gekennzeichnet, dass** wenigstens ein Radarsensor unterhalb einer Deckschicht eines Roboters der Roboteranordnung angeordnet ist.

4. System nach einem der vorhergehenden Ansprüche, **gekennzeichnet durch** Krafterfassungsmittel zum Erfassen von auf die Roboteranordnung wirkenden Kräften, das mit der Sicherheitssteuerung zum Überwachen der Roboteranordnung auf Basis erfasster Kräfte signalverbunden ist.

5. Verfahren zum Steuern eines Systems nach einem der vorhergehenden Ansprüche, **gekennzeichnet durch** die Schritte:
- Erfassen (S10) von Hindernissen in wenigstens einem Teil des Arbeitsbereich der Roboteranordnung; und
- Überwachen (S20 - S50) der Roboteranordnung auf Basis des Abstandes zwischen wenigstens einem erfassten Hindernis und der Roboteranordnung und/oder einem Prozessbereich der Roboteranordnung und/oder der zeitlichen Änderung dieses Abstandes.

6. Verfahren nach dem vorhergehenden Anspruch, **gekennzeichnet durch** die Schritte:
- Ermitteln (S20) eines Abstandes wenigstens eines erfassten Hindernisses in dem Arbeitsbereich der Roboteranordnung; und
- Auslösen (S30, S50) einer Sicherheitsreaktion, insbesondere
- Reduzieren einer Geschwindigkeit der Roboteranordnung, insbesondere Stillsetzen der Roboteranordnung,
- Anfahren einer Sicherheitspose der Roboteranordnung,
- Erhöhen einer regelungstechnischen Nachgiebigkeit der Roboteranordnung und/oder
- Verändern eines Prozesses der Roboteranordnung,
falls der Abstand einen vorgegebenen Mindestabstand unterschreitet.

7. Verfahren nach dem vorhergehenden Anspruch, **gekennzeichnet durch** die Schritte:
- Reduzieren einer Soll-Geschwindigkeit der Roboteranordnung (S30), falls der Abstand den vorgegebenen Mindestabstand unterschreitet; und
- Stillsetzen der Roboteranordnung (S50), Anfahren einer Sicherheitspose der Roboteranordnung und/oder Erhöhen einer regelungstechnischen Nachgiebigkeit der Roboteranordnung, falls die Roboteranordnung die Soll-Geschwindigkeit überschreitet;
und/oder die Schritte
- Verändern des Prozesses der Roboteranordnung (S30), falls der Abstand den vorgegebenen Mindestabstand unterschreitet; und
- Deaktivieren des Prozesses (S50), falls der Abstand zusätzlich einen vorgegebenen weiteren Mindestabstand unterschreitet.

8. Verfahren nach einem der Ansprüche 5 bis 7, **dadurch gekennzeichnet, dass** die Sensoranordnung (25) einen zugänglichen Teil einer geschlossenen Kontur um die Roboteranordnung vollständig erfasst.

9. Verfahren nach einem der Ansprüche 5 bis 8, **gekennzeichnet durch** die Schritte:
- Erfassen (S10) von Hindernissen in einer von mehreren Zonen des Arbeitsbereichs der Roboteranordnung; und
- Auslösen (S30, S50) einer zonenspezifischen Sicherheitsreaktion in Abhängigkeit von einer Zone des Arbeitsbereichs, in der ein Hindernis erfasst wird.

10. Verfahren nach einem der Ansprüche 5 bis 9, **gekennzeichnet durch** den Schritt:
- Ermitteln von Hindernissen, insbesondere in wenigstens einer, insbesondere roboterfesten, Zone des Arbeitsbereichs der Roboteranordnung, mittels unterschiedlicher Sensoren (21A, 21B) der Sensoranordnung in Abhängigkeit von einer Pose der Roboteranordnung.

11. Verfahren nach einem der Ansprüche 5 bis 10, **gekennzeichnet durch** die Schritte:
- Erfassen von auf die Roboteranordnung wirkenden Kräften; und
- Auslösen einer Sicherheitsreaktion (S50), insbesondere
- Reduzieren einer Geschwindigkeit der Roboteranordnung, insbesondere Stillsetzen der Roboteranordnung,
- Anfahren einer Sicherheitspose der Roboteranordnung,
- Erhöhen einer regelungstechnischen Nachgiebigkeit der Roboteranordnung und/oder
- Verändern eines Prozesses der Roboteranordnung,
falls wenigstens eine erfasste Kraft einen vorgegebenen Maximalwert überschreitet.

12. Computerprogrammprodukt mit einem Programmcode, der auf einem von einem Computer lesbaren Medium gespeichert ist, zur Durchführung eines Verfahrens nach einem der vorhergehenden Ansprüche 5 bis 11 auf einem System gemäß Ansprüchen 1 bis 4.

## Claims

1. System having
- a robot arrangement having at least one robot (10) and
- a controller (30) for controlling the robot arrangement,
- a sensor arrangement (21A, 21B, 23, 24, 25) for sensing obstacles in at least a part of a work region of the robot arrangement; and
- a safety controller (31) for monitoring the robot arrangement as to a distance between at least one sensed obstacle and the robot arrangement and/or a process region of the robot arrangement and/or a temporal change in this distance,
**characterized in that** the sensor arrangement
- has at least one radar sensor (21A, 21B) arranged on a base (11) of a robot (10) of the robot arrangement; and
- has at least one radar sensor (23, 24) arranged at a movable element (13, 24), in particular distal end element or intermediate element arranged between the distal end element and the base, of a robot (10) of the robot arrangement,
wherein at least one radar sensor has at least one radar lens (26) for optionally modifying a sensing region (121A, 121B, 122, 125), wherein the sensing region is modifiable in dependence on a configuration of the robot arrangement and a process.

2. System according to the preceding claim, **characterized in that** the sensor arrangement has at least one radar sensor (25) that is fixed relative to the surroundings at a distance from the robot arrangement.

3. System according to either of the preceding claims, **characterized in that** at least one radar sensor is arranged under a cover layer of a robot of the robot arrangement.

4. System according to any of the preceding claims, **characterized by** a force sensing means for sensing forces acting on the robot arrangement, with the means being connected for signal communication to the safety controller for monitoring the robot arrangement on the basis of sensed forces.

5. Method for controlling a system according to any of the preceding claims, **characterized by** the steps of:
- sensing (S10) obstacles in at least a part of the work region of the robot arrangement; and
- monitoring (S20-S50) the robot arrangement as to the distance between at least one sensed obstacle and the robot arrangement and/or a process region of the robot arrangement and/or the temporal change in this distance.

6. Method according to the preceding claim, **characterized by** the steps of:
- ascertaining (S20) a distance of at least one sensed obstacle in the work region of the robot arrangement; and
- triggering (S30, S50) a safety reaction, in particular
- reducing a speed of the robot arrangement, in particular shutting down the robot arrangement,
- adopting a safety pose of the robot arrangement,
- increasing a control-technological compliance of the robot arrangement and/or
- changing a process of the robot arrangement if the distance falls below a specified minimum distance.

7. Method according to the preceding claim, **characterized by** the steps of:
- reducing a set speed of the robot arrangement (S30) if the distance falls below the specified minimum distance; and
- shutting down the robot arrangement (S50), adopting a safety pose of the robot arrangement and/or increasing a control-technological compliance of the robot arrangement if the robot arrangement exceeds the set speed;
and/or the steps of
- changing the process of the robot arrangement (S30) if the distance falls below the specified minimum distance; and
- deactivating the process (S50) if the distance additionally falls below a specified further minimum distance.

8. Method according to any of Claims 5 to 7, **characterized in that** the sensor arrangement (25) completely senses an accessible part of a closed contour around the robot arrangement.

9. Method according to any of Claims 5 to 8, **characterized by** the steps of:
- sensing (S10) obstacles in one of a plurality of zones of the work region of the robot arrangement; and
- triggering (S30, S50) a zone-specific safety reaction in dependence on a zone of the work region in which an obstacle is sensed.

10. Method according to any of Claims 5 to 9, **characterized by** the step of:
- ascertaining obstacles, in particular in at least one zone, in particular fixed in relation to the robot, of the work region of the robot arrangement, by means of different sensors (21A, 21B) of the sensor arrangement in dependence on a pose of the robot arrangement.

11. Method according to any of Claims 5 to 10, **characterized by** the steps of:
- sensing forces acting on the robot arrangement; and
- triggering a safety reaction (S50), in particular
- reducing a speed of the robot arrangement, in particular shutting down the robot arrangement,
- adopting a safety pose of the robot arrangement,
- increasing a control-technological compliance of the robot arrangement and/or
- changing a process of the robot arrangement
if at least one sensed force exceeds a specified maximum value.

12. Computer program product with a program code that is stored on a computer-readable medium, for carrying out a method according to any of the preceding Claims 5 to 11 on a system according to Claims 1 to 4.

## Revendications

1. Système comprenant
- un arrangement de robots, qui possède au moins un robot (10), et
- une commande (30) destinée à commander l'arrangement de robots,
- un arrangement de capteurs (21A, 21B, 23, 24, 25) destiné à détecter des obstacles dans au moins une partie de la région de travail de l'arrangement de robots ; et
- une commande de sécurité (31) destinée à surveiller l'arrangement de robots sur la base d'un écart entre au moins un obstacle détecté et l'arrangement de robots et/ou une zone de processus de l'arrangement de robots et/ou une modification dans le temps de cet écart **caractérisé en ce que** l'arrangement de capteurs
- possède au moins un capteur radar (21A, 21B) qui est disposé à une base (11) d'un robot (10) de l'arrangement de robots ; et
- possède au moins un capteur radar (23, 24) qui est disposé au niveau d'un membre mobile (13, 24), notamment un membre d'extrémité distal ou un membre intermédiaire disposé entre celui-ci et la base, d'un robot (10) de l'arrangement de robots,
au moins un capteur radar possédant au moins une lentille de radar (26) servant à la modification au choix d'une plage de détection (121A,121B, 122, 125), la plage de détection étant modifiable en fonction d'une configuration de l'arrangement de robots et d'un processus.

2. Système selon la revendication précédente, **caractérisé en ce que** l'arrangement de capteurs possède au moins un capteur radar (25) fixe par rapport à l'environnement, espacé de l'arrangement de robots.

3. Système selon l'une des revendications précédentes, **caractérisé en ce qu'**au moins un capteur radar est disposé sous une couche de recouvrement d'un robot de l'arrangement de robots.

4. Système selon l'une des revendications précédentes, **caractérisé par** des moyens de détection de force destinés à détecter des forces agissant sur l'arrangement de robots, lequel est en liaison de signal avec la commande de sécurité destinée à surveiller l'arrangement de robots sur la base des forces détectées.

5. Procédé de commande d'un système selon l'une des revendications précédentes, **caractérisé par** les étapes suivantes :
- détection (S10) d'obstacles dans au moins une partie de la région de travail de l'arrangement de robots ; et
- surveillance (S20 - S50) de l'arrangement de robots sur la base de l'écart entre au moins un obstacle détecté et l'arrangement de robots et/ou une zone de processus de l'arrangement de robots et/ou une modification dans le temps de cet écart.

6. Procédé selon la revendication précédente, **caractérisé par** les étapes suivantes :
- identification (S20) d'un écart d'au moins un obstacle détecté dans la région de travail du robot ; et
- déclenchement (S30, S50) d'une réaction de sécurité, notamment
- réduction d'une vitesse de l'arrangement de robots, notamment immobilisation de l'arrangement de robots,
- déplacement de l'arrangement de robots à une posture de sécurité,
- augmentation d'une flexibilité technique de régulation de l'arrangement de robots et/ou
- modification d'un processus de l'arrangement de robots
dans le cas où l'écart devient inférieur à un écart minimal prédéfini.

7. Procédé selon la revendication précédente, **caractérisé par** les étapes suivantes :
- réduction d'une vitesse de consigne de l'arrangement de robots (S30) dans le cas où l'écart devient inférieur à l'écart minimal prédéfini ; et
- immobilisation de l'arrangement de robots (S50), déplacement de l'arrangement de robots à une posture de sécurité et/ou augmentation d'une flexibilité technique de régulation de l'arrangement de robots dans le cas où l'arrangement de robots dépasse la vitesse de consigne ; et/ou les étapes :
- modification du processus de l'arrangement de robots (S30) dans le cas où l'écart devient inférieur à l'écart minimal prédéfini ; et
- désactivation du processus (S50) dans le cas où l'écart devient en plus inférieur à un écart minimal supplémentaire prédéfini.

8. Procédé selon l'une des revendications 5 à 7, **caractérisé en ce que** l'arrangement de capteurs (25) détecte une partie accessible d'un contour fermé autour de l'arrangement de robots.

9. Procédé selon l'une des revendications 5 à 8, **caractérisé par** les étapes suivantes :
- détection (S10) d'obstacles dans l'une de plusieurs zones de la région de travail de l'arrangement de robots ; et
- déclenchement (S30, S50) d'une réaction de sécurité spécifique à la zone en fonction d'une zone de la région de travail dans laquelle est détecté un obstacle.

10. Procédé selon l'une des revendications 5 à 9, **caractérisé par** l'étape suivante :
- identification d'obstacles, notamment dans au moins une zone, notamment fixe par rapport au robot, de la région de travail de l'arrangement de robots, au moyen de différents capteurs (21A, 21B) de l'arrangement de capteurs en fonction d'une posture de l'arrangement de robots.

11. Procédé selon l'une des revendications 5 à 10, **caractérisé par** les étapes suivantes :
- détection de forces agissant sur l'arrangement de robots ; et
- déclenchement d'une réaction de sécurité (S50), notamment
- réduction d'une vitesse de l'arrangement de robots, notamment immobilisation de l'arrangement de robots,
- déplacement de l'arrangement de robots à une posture de sécurité,
- augmentation d'une flexibilité technique de régulation de l'arrangement de robots et/ou
- modification d'un processus de l'arrangement de robots
dans le cas où au moins une force détectée devient supérieure à une valeur maximale prédéfinie.

12. Produit de programme informatique comprenant un code de programme, qui est enregistré sur un support lisible par ordinateur, destiné à mettre en œuvre un procédé selon l'une des revendications 5 à 11 sur un système selon les revendications 1 à 4.
